# EUROPÄISCHE PATENTANMELDUNG

(11) **EP 2 050 530 A1**
(43) Veröffentlichungstag der Anmeldung: **22.04.2009**
(21) Anmeldenummer: 08105541.0
(22) Anmeldetag: 10.10.2008
(51) Int. Cl.: B23B 51/02

(54) **Schlagbohrwerkzeug**

(30) Priorität: 19.10.2007 DE 102007000534
(71) Anmelder: HILTI Aktiengesellschaft, 9494 Schaan (LI)
(72) Erfinder: Koch, Olaf, 86916, Kaufering (DE)

(57) **Zusammenfassung**

Ein Schlagbohrwerkzeug (1) mit einem Hartstoffvollkopf (3, 3', 3") mit zwei Hauptschneiden (4) mit je einer Hauptschneidkante (5) und mit zwei Nebenschneiden (6) mit je einer Nebenschneidkante (7), welche bezüglich der Hauptschneidkante (5) entlang einer Bohrachse (A) axial zurückversetzt ist, wobei die Nebenschneiden (6) an ihrem radialen Äusseren beidseitig je eine, schräg zur Nebenschneidkante (7) verlaufende, Tangentialkante (8) aufweisen.

## Beschreibung

Die Erfindung bezeichnet ein Schlagbohrwerkzeug mit einem Hartstoffvollkopf zum Bohren von Beton, Gestein oder Mauerwerk.

Üblicherweise sind moderne, hochbeanspruchbare Schlagbohrwerkzeuge für Gestein am Schaftende mit einem kompakten Hartstoffvollkopf mit je zwei Haupt- und Nebenschneiden bestückt. Neben der die Hauptschneiden unterstützenden Schneidfunktion dient die Nebenschneide insbesondere einer Verbesserung des Bohrverhaltens bei einem duktilen Armierungseisentreffer.

Nach der EP1604793 ist ein Schlagbohrwerkzeug mit einem kreuzförmigen Hartstoffvollkopf mit zwei diametral angeordneten Hauptschneiden und zwei diametral angeordneten Nebenschneiden bekannt, die je eine Nebenschneidkante in Form eines tangential gekrümmten Kreisbogenabschnitts ausbilden, welche bezüglich der Hauptschneiden axial zurückversetzt ist, wobei der Kreisbogenabschnitt radial innen durch eine axial konkave Einkerbung von der Drehachse beabstandet ist sowie radial aussen exakt radial verläuft.

Zudem weist nach der EP1024247 bei einem Schlagbohrwerkzeug mit einer in einen Schlitz im Bohrkopf eingesetzten Hartstoffschneidplatte, diese an den sich diametral erstreckenden Hauptschneiden an ihrem radialen Äusseren beidseitig je eine, quer zur Hauptschneide verlaufende, Tangentialkante auf.

Die Aufgabe der Erfindung besteht in der weiteren Optimierung eines Hartstoffvollkopfes für ein Schlagbohrwerkzeug, insbesondere im Hinblick auf eine verbesserte Robustheit beim schrägen Armierungsbohren.

Die Aufgabe wird im Wesentlichen durch die Merkmale des Anspruchs 1 gelöst. Vorteilhafte Weiterbildungen ergeben sich aus den Unteransprüchen.

So weist ein Schlagbohrwerkzeug mit einem Hartstoffvollkopf zwei Hauptschneiden mit je einer Hauptschneidkante und zwei Nebenschneiden auf, die je eine Nebenschneidkante ausbilden, welche bezüglich der Hauptschneidkante entlang einer Bohrachse axial zurückversetzt ist, wobei die Nebenschneiden in ihrem radialen äusseren Bereich beidseitig je eine, schräg zur Nebenschneidkante verlaufende, Tangentialkante aufweisen.

Die schräg zur Nebenschneidkante verlaufenden Tangentialkanten an den Nebenschneiden dienen zum, das Schlagbohrwerkzeug axial zurückversetzenden, Auflaufen an einem allfälligen Armierungseisentreffer, wodurch die nachfolgende Hauptschneide nicht oder geringer in das duktile Armierungseisen eindringt und somit weniger beansprucht wird. Die Wahrscheinlichkeit eines allfälligen Abbrechens der radial äusseren Ecken der Hauptschneiden bei einem Armierungseisentreffer wird somit wesentlich verringert und das Schlagbohrwerkzeug somit insgesamt robuster.

Vorteilhaft bildet die Tangentialkante mit der nahen Nebenschneidkante einen Kantenwinkel im Bereich von 50° bis 85°, weiter vorteilhaft von 70° aus, wodurch der Abbau sowohl von sprödem Gestein als auch von duktilem Armierungseisen optimiert ist.

Vorteilhaft sind die Hauptschneiden zueinander diametral angeordnet und erstrecken sich durchgängig über den Bohrdurchmesser, wodurch die wesentliche Abbauarbeit von der axial vorstehenden Hauptschneide geleistet wird, auf die sich die Schlagenergie konzentriert.

Vorteilhaft bildet die Hauptschneidkante eine Bohrspitze aus, von der ausschliesslich im radial Inneren beidseitig schräg zur Hauptschneidkante je eine Zusatzschneidkante ausgeht, wodurch das Anbohrverhalten optimiert ist.

Vorteilhaft sind die Nebenschneiden zueinander diametral angeordnet und erstrecken sich ausschliesslich über einen radial äusseren Bereich, wodurch die Symmetrie erhalten wird.

Vorteilhaft weist die Nebenschneide im radial mittleren Bereich eine axial konkave Einkerbung auf, die sich weiter vorteilhaft bis zu den Tangentialkanten erstreckt, wodurch dort eine Spitze ausgebildet wird.

Vorteilhaft ist die Nebenschneidkante zur benachbarten Hauptschneide hin tangential gekrümmt, weiter vorteilhaft parabelförmig, wodurch der Abtransport des Bohrkleins unterstützt wird.

Vorteilhaft stehen die Hauptschneidkante und (im radial Äusseren) die Nebenschneidkante senkrecht zueinander, wodurch ein (bezüglich der Grundfläche vierzählig rotationssymmetrischer) kreuzförmiger Hartstoffvollkopf ausgebildet ist, der für eine gleichmässig viergängige Bohrwendel passend für Bohrdurchmesser im Bereich von 14 bis 40 optimal ist.

Alternativ vorteilhaft bilden die Hauptschneidkante und (im radial Äusseren) die nahe benachbarte Nebenschneidkante zueinander einen Schneidkantenwinkel im Bereich von 20° bis 45° aus, wodurch ein (bezüglich der Grundfläche zweizählig rotationssymmetrischer) abgeflachter Hartstoffvollkopf ausgebildet ist, der für eine gleichmässig zweigängige Bohrwendel passend für Bohrdurchmesser im Bereich von 8 bis 12 optimal ist.

Vorteilhaft ist der Hartstoffvollkopf im Querschnitt X-förmig ausgebildet, der für eine gleichmässig zweigängige Bohrwendel mit Nebenwendeln passend für Bohrdurchmesser im Bereich von 20 bis 40 optimal ist.

Alternativ vorteilhaft ist der Hartstoffvollkopf im Querschnitt rechteckig ausgebildet, der für eine gleichmässig zweigängige Bohrwendel ohne Nebenwendeln passend für Bohrdurchmesser im Bereich von 8 bis 18 optimal ist.

Die Erfindung wird bezüglich eines vorteilhaften Ausführungsbeispiels näher erläutert mit:
Fig. 1 als Schlagbohrwerkzeug in Seitenansicht
Fig. 2 das Schlagbohrwerkzeug aus Fig. 1 in Aufsicht
Fig. 3 als Variante des Hartstoffvollkopfes
Fig. 4 als weitere Variante des Hartstoffvollkopfes

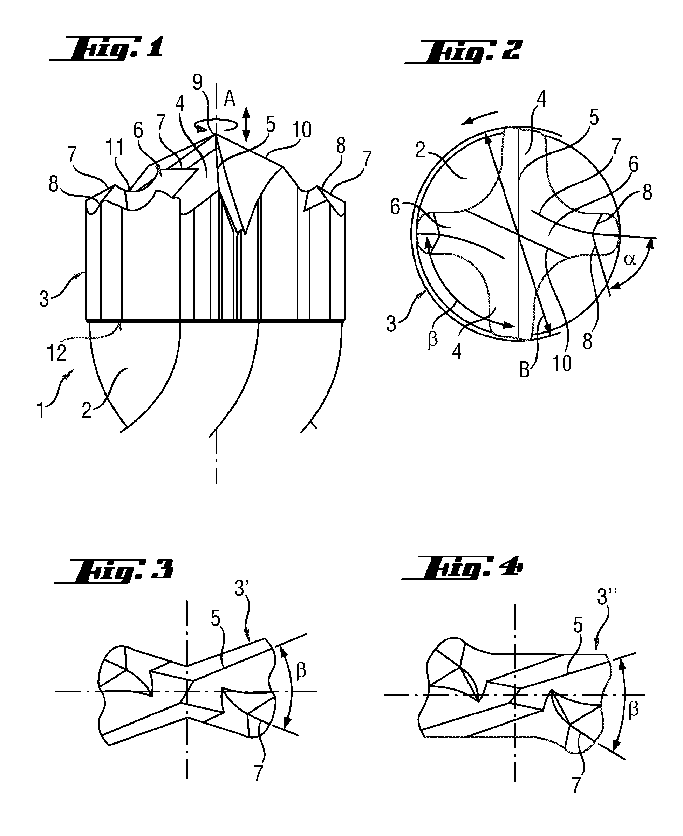

Nach Fig. 1 weist ein Schlagbohrwerkzeug 1 einen wendelförmigen Schaft 2 und einen daran stumpf mit seiner Grundfläche 12 aufgeschweissten Hartstoffvollkopf 3 mit einer an der Drehachse A angeordneten Bohrspitze 9 auf, von der eine Hauptschneide 4 mit einer Hauptschneidkante 5 ausgeht sowie dazu beidseitig tangential schräg je eine Zusatzschneidkante 10, die sich nur über die radial innere Hälfte erstreckt. Zudem ist erst ausserhalb des radial inneren Fünftels der Drehachse A eine Nebenschneide 6 ausgebildet, welche eine Nebenschneidkante 7 aufweist, die bezüglich der Hauptschneidkante 5 axial zurückversetzt ist. Die Nebenschneide 6 weist im radial mittleren Bereich eine axial konkave Einkerbung 11 auf, die sich bis zu den Tangentialkanten 8 erstreckt.

Nach Fig. 2 sind die zwei Hauptschneiden 4 zueinander diametral angeordnet und erstrecken sich durchgängig über den Bohrdurchmesser B. Die zwei zueinander diametral angeordneten Nebenschneiden 6 weisen an ihrem radialen Äusseren beidseitig je eine Tangentialkante 8 auf, die mit einem Kantenwinkel [alpha] von 70° schräg zur radial äusseren Nebenschneidkante 7 verlaufen. Im radial inneren Bereich ist die Nebenschneidkante 7 zur benachbarten Hauptschneide 4 hin tangential parabelförmig gekrümmt. Die Hauptschneidkante 5 und im radial Äusseren die Nebenschneidkante 7 stehen zueinander senkrecht zueinander, wodurch ein bezüglich der Grundfläche 12 (Fig. 1) vierzählig rotationssymmetrischer, kreuzförmiger Hartstoffvollkopf 3 ausgebildet ist.

Nach Fig. 3 und 4 bilden die Hauptschneidkante 5 und im radial äusseren Bereich die nahe benachbarte Nebenschneidkante 7 zueinander einen Schneidkantenwinkel [beta] von 30° aus, wobei nach Fig. 3 ein bezüglich der Grundfläche zweizählig rotationssymmetrischer, abgeflachter, im Querschnitt etwa X-förmiger Hartstoffvollkopf 3' ausgebildet und nach Fig. 4 der Hartstoffvollkopf 3" im Querschnitt etwa rechteckig ausgebildet ist.

## Patentansprüche

1. Schlagbohrwerkzeug mit einem Hartstoffvollkopf (3, 3', 3") mit zwei Hauptschneiden (4) mit je einer Hauptschneidkante (5) und mit zwei Nebenschneiden (6) mit je einer Nebenschneidkante (7), welche bezüglich der Hauptschneidkante (5) entlang einer Bohrachse (A) axial zurückversetzt ist, **dadurch gekennzeichnet, dass** die Nebenschneiden (6) an ihrem radialen Äusseren beidseitig je eine, schräg zur Nebenschneidkante (7) verlaufende, Tangentialkante (8) aufweisen.

2. Schlagbohrwerkzeug nach Anspruch 1, **dadurch gekennzeichnet, dass** die Tangentialkante (8) mit der nahen Nebenschneidkante (7) einen Kantenwinkel ([alpha]) im Bereich von 50° bis 85° ausbildet.

3. Schlagbohrwerkzeug nach Anspruch 1 oder 2, **dadurch gekennzeichnet, dass** die Hauptschneiden (4) zueinander diametral angeordnet sind und sich durchgängig über den Bohrdurchmesser (B) erstrecken.

4. Schlagbohrwerkzeug nach einem der Ansprüche 1 bis 3, **dadurch gekennzeichnet, dass** die Hauptschneidkante (5) eine Bohrspitze (9) ausbildet, von der ausschliesslich im radial inneren Bereich beidseitig schräg zur Hauptschneidkante (5) je eine Zusatzschneidkante (10) ausgeht.

5. Schlagbohrwerkzeug nach einem der Ansprüche 1 bis 4, **dadurch gekennzeichnet, dass** die Nebenschneiden (6) zueinander diametral angeordnet sind und sich ausschliesslich über einen radial äusseren Bereich erstrecken.

6. Schlagbohrwerkzeug nach einem der Ansprüche 1 bis 5, **dadurch gekennzeichnet, dass** die Nebenschneide (6) im radial mittleren Bereich eine axial konkave Einkerbung (11) aufweist.

7. Schlagbohrwerkzeug nach einem der Ansprüche 1 bis 6, **dadurch gekennzeichnet, dass** die Nebenschneidkante (7) zur benachbarten Hauptschneide (4) hin tangential gekrümmt ist.

8. Schlagbohrwerkzeug nach einem der Ansprüche 1 bis 7, **dadurch gekennzeichnet, dass** die Hauptschneidkante (5) und die Nebenschneidkante (7) zueinander senkrecht stehen.

9. Schlagbohrwerkzeug nach einem der Ansprüche 1 bis 7, **dadurch gekennzeichnet, dass** die Hauptschneidkante (5) und die nahe benachbarte Nebenschneidkante (7) zueinander einen Schneidkantenwinkel ([beta]) im Bereich von 20° bis 45° ausbilden.

10. Schlagbohrwerkzeug nach einem der Ansprüche 1 bis 9, **dadurch gekennzeichnet, dass** der Hartstoffvollkopf (3') im Querschnitt X-förmig ausgebildet ist.

11. Schlagbohrwerkzeug nach einem der Ansprüche 1 bis 9, **dadurch gekennzeichnet, dass** der Hartstoffvollkopf (3") im Querschnitt rechteckig ausgebildet ist.
